# EUROPÄISCHE PATENTSCHRIFT

(11) **EP 0 737 092 B1**
(45) Veröffentlichungstag und Bekanntmachung des Hinweises auf die Patenterteilung: **20.05.1998**
(21) Anmeldenummer: 95905029.5
(22) Anmeldetag: 30.12.1994
(51) Int. Cl.: B01D 29/01, B01D 29/07, B01D 29/11, B01D 29/21, B01D 29/33, B01D 46/52

(54) **VERFAHREN ZUR HERSTELLUNG EINES FILTEREINSATZES**
METHOD OF PRODUCING A FILTER INSERT
PROCEDE DE FABRICATION D'UNE CARTOUCHE DE FILTRE

(30) Priorität: 30.12.1993 DE 4345122
(43) Veröffentlichungstag der Anmeldung: 16.10.1996
(73) Patentinhaber: "JACOBI" Systemtechnik GmbH, 01474 Weissig bei Dresden (DE)
(72) Erfinder: KÄHLER, Kai, D-20355 Hamburg (DE)
(74) Vertreter: Christiansen, Henning, Dipl.-Ing.
(86) Internationale Anmeldenummer: DE9401559
(87) Internationale Veröffentlichungsnummer: WO9517944

(56) Entgegenhaltungen:
- EP-A- 0 382 330
- FR-A- 2 490 970

## Beschreibung

Die Erfindung betrifft ein Verfahren zur Herstellung eines Filtereinsatzes nach dem Oberbegriff des Anspruchs 1 sowie eine Vorrichtung zur Durchführung des Verfahrens.

Filtereinsätze der im Oberbegriff des Anspruchs 1 spezifizierten Art dienen dazu, Verunreinigungen aus einem durch ein Filter hindurchströmenden Fluid (insbesondere Luft oder technischen Gasen, grundsätzlich aber auch Flüssigkeiten) abzuscheiden. In Luftfiltern werden gegenwärtig überwiegend Filterelemente verwendet, welche aus einem Mikro-Faservlies, insbesondere aus Glasfasern, bestehen.

Um die effektive Filterfläche gegenüber der Anströmfläche des ein Filterelement oder einen Filterbereich bildenden Luftfilters zu vergrößern, ist das Filtermedium zickzackförmig gefaltet, so daß eine Anzahl von über Faltenkanten aneinander anschließenden Falten entsteht, welche in einem spitzen Winkel zu den Wandungen der Faltung und dabei quer zur Richtung der Faltenkanten von dem zu reinigenden Medium durchströmt werden.

Durch die Materialablagerung - insbesondere auch die Ablagerung größerer Partikel - an der Anströmseite des Filters, Wirbelbildungen im anströmenden Fluid, geringfügige Unregelmäßigkeiten der Faltung usw. kommt es beim Durchströmen des Filters zu Inhomogenitäten der Fluidströmung, die die Faltenanordnung einer starken mechanischen Wechselbelastung aussetzen und eine Deformation der Faltenanordnung bewirken können.

Um die Falten in definiertem Abstand voneinander zu halten und die Faltenanordnung des Filtereinsatzes mechanisch zu stabilisieren, werden die Falten daher beispielsweise - wie etwa in US-A-3,531,920 oder in einer speziellen Weiterbildung in DE-A-41 26 126 A1 beschrieben - derart mit aus der Ebene der Faltenwände hervorstehenden Vorsprüngen versehen, daß die Vorsprünge einander benachbarter Faltenwände aneinander anliegen und die Faltenwände gegeneinander abstützen. Damit die Faltenwände zum anströmenden Fluid geneigt ausgerichtet sein können , d.h. die Faltenlagen annähernd dreieckigen Querschnitt haben, müssen auch die Vorsprünge annähernd dreieckigen oder trapezförmigen Querschnitt haben.

Diese Anordnungen sind für Filtereinsätze bis etwa 100 mm Faltenhöhe bei relativ dichter Faltenpackung bewährt. Jenseits dieser Faltenhöhe und bei größerem Faltenabstand wird die erforderliche Prägetiefe jedoch so groß, daß bei den üblichen Filtermaterialien die Gefahr von Durchprägungen besteht und damit die Ausschußquote in nicht hinnehmbarer Weise ansteigen würde.

Aus DE-A-40 38 966 ist es auch bekannt, separate Abstandshalter mit gleicher Funktion auf die Faltenwände aufzusetzen bzw. in diese einzufügen. Die Abstandshalter können - wie in der vorgenannten Druckschrift als eine Möglichkeit erwähnt oder auch in DE-A-30 37 019 A1 ausgeführt - Klebstoffaggregate, insbesondere in Fadenform, sein. Diese haben neben der abstandshaltenden zusätzlich eine die Faltenwände verbindende Wirkung und erhöhen somit die Steifigkeit des Filtereinsatzes zusätzlich.

Der Klebstoffauftrag erfolgt vor dem Falten des Filtermaterials auf die ebene Bahn, und die Verklebung der Faltenwände erfolgt durch den Kontakt der Klebstoffäden miteinander beim Zusammenfalten. Diese Lösung ist daher nur für sehr dichte Faltenpackungen geeignet. Zudem haben die auf diese Weise gebildeten Faltenlagen eher mäanderförmige Querschnittsgestalt, was nicht oiptimale Strömugseigenschaften zur Folge hat.

In DE-A-39 03 730 A1 ist beschrieben, daß ein die Faltenlagen miteinander verbindender und Stabilisierender Klebstoffaden, der nach der Faltung auf den Kantenbereich aufgetragen werden kann, mit Prägungen in den Faltenwänden kombiniert ist. Diese Lösung ergibt mechanisch sehr stabile Filtereinsätze, ist jedoch hinsichtlich der erreichbaren Faltenhöhe und des Faltenabstandes im wesentlichen den gleichen Beschränkungen unterworfen wie die Lösungen ohne Klebstoffauftrag.

In DE-A-42 06 407 ist beschrieben, daß der Faltenkantenbereich einer bereits gefalteten Filtermaterialbahn mit einem feinen Gespinst von Klebstoffäden überzogen wird, um die Falten miteinander zu verbinden und den Filtereinsatz zu stabiliseren. Auch diese Lösung ist für größere Faltenabstände nicht mehr praktikabel, da das feine Klebstoffgespinst keine hinreichend stabile Verbindung weiter auseinanderliegender Faltenkanten herstellen kann und die Gespinstfäden (insbesondere bei Auftrag von unten auf eine im Fertigungsprozeß obenliegende Faltenbahn) "durchhängen" und keine definierte Lage zu den Faltenkanten mehr einnehmen.

Aus EPA 0 377 419 A1 iat eine Anordnung bekannt, bei der durch im Scheitel- sowie im Sohlenbereich einer zu bildenden Faltenwandanordnung lokalisierte Klebstoffaggregate unterschiedlicher Größe (im Scheitelbereich größer, im Sohlenbereich kleiner) die Verklebung von Faltenwänden in einer Weise realisiert werden kann, daß ein annähernd dreieckiger Faltenquerschnitt entsteht. Größere Faltenabstände und damit auch -höhen sind jedoch auf diese Weise nicht realisierbar, weil dafür sehr voluminöse Klebstoffaggregate erforderlich wären, die die wirksame Filterfläche stark verringern würden.

Der Erfindung liegt daher die Aufgabe zugrunde, ein Verfahren der gattungsgemäßen Art, mit dem die Realisierung von Filtereinsätzen mit großer Höhe und/oder großem Faltenabstand ermöglicht wird, sowie eine Vorrichtung zur Durchführung dieses Verfahrens anzugeben.

Diese Aufgabe wird durch ein Verfahren mit den Merkmalen des Anspruchs 1 bzw. eine Vorrichtung mit den Merkmalen des Anspruchs 18 gelöst.

Die Erfindung schließt den Gedanken ein, ein zur Verbindung und Versteifung zweier benachbarter Faltenwände auf eine der Faltenwände aufgetragenes Klebstoffaggregat zunächst über eine enge Annäherung der anderen Faltenwand mit dieser zu verbinden bzw. zwei, auf beide Faltenwände aufgetragene, Klebstoffpunkte oder -fäden auf dieselbe Weise miteinander in so engen Kontakt zu bringen, daß sie zu einem Klebstoffaggregat verschmelzen. Danach wird das an der benachbarten Faltenwand haftende bzw. das verbundene Klebstoffaggregat durch Auseinanderziehen der Faltenwände, an denen es fest anhaftet, im Querschnitt in der Richtung senkrecht zu den Faltenwänden auseinandergezogen und dadurch gestreckt und schließlich im gestreckten Zustand, der einem vergleichsweise großen Abstand der Faltenwände entspricht, ausgehärtet. Nach der Aushärtung sind dann die Faltenwände im gewünschten Abstand zueinander fixiert, d.h. miteinander verbunden und gleichzeitig in festem Abstand gegeneinander abgestützt.

Dies kann in vorteilhafter Weise im Rahmen der bei der Herstellung ohnehin stattfindenden Vorschubbewegung des Filtermaterials und des gefalteten Filtereinsatzes dadurch erfolgen, daß das im ersten Teilschritt (mit relativ geringem Faltenabstand) vorgebildete Faltenpaket im zweiten Teilschritt mit gegenüber dem Vorschub im ersten Teilschritt erhöhter Geschwindigkeit bewegt wird.

Besonders große Faltenabstände lassen sich realisieren, wenn in die Ebene mindestens eines Teils der Faltenwände Vertiefungen und/oder Erhebungen zur Versteifung der Faltung eingeprägt werden derart, daß die Vertiefungen und/oder Erhebungen benachbarter Faltenwände mindestens abschnittsweise über den separaten Abstandshalter (das Klebstoffaggregat) zueinander auf Abstand gehalten und miteinander verbunden sind. Dies ist jedoch nicht unbedingt erforderlich - die Abstandshaltung der Faltenände kann auch ausschließlich durch den separaten Abstandshalter, insbesondere den aufgetragenen Klebstoff, erfolgen.

Das Verfahren läuft in günstiger Weise ab, wenn den Klebstoffschichten mindestens in einem Abschnitt ihrer Längserstreckung senkrecht zur Ebene der benachbarte Faltenwände eine größere Abmessung (Höhe) verliehen wird als die mittlere Abmessung parallel zu dieser Ebene (Breite), speziell, wenn die Klebstoffschichten gleichsinnig mit der Querschnittsverengung einer Falte in Richtung auf die Falten"spitze" hin flacher gebildet werden. Dazu kann die pro Längeneinheit auf die Materialbahn aufgetragene Klebstoffmenge derart gesteuert werden, daß die Klebstoffaggregate eine in Richtung ihrer Längserstreckung nicht konstante Klebstoffmenge pro Längeneinheit umfassen, und zwar speziell so, daß die Klebstoffmenge in Richtung auf die zukünftigen Falten"spitzen" hin reduziert wird.

Für die Filterleistung ist es von Vorteil, wenn der Klebstoffauftrag auf einer möglichst geringen Fläche des Filtermaterials, insbesondere im wesentlichen linear, d.h. mit gegenüber der Länge der Klebstoffschicht geringer Breite, erfolgt.

Es ist auch möglich, daß eine Klebstoffschicht mit nennenswerter Höhe überhaupt nur in demjenigen Bereich der Faltung vorgesehen ist, in dem die Faltenwände großen Abstand voneinander aufweisen sollen, während der den Falten"spitzen" nahe Bereich nicht verklebt wird.

Sofern Vertiefungen bzw. Erhebungen im Filtermaterial vorgesehen sind, können diese zum einen so ausgebildet werden, daß ihre Höhe in Richtung ihrer Längserstreckung im wesentlichen konstant ist - etwa in Art einer im wesentlichen durchgehednen Rillierung des Fiultermaterials - und zum anderen auch derart, daß ihre Höhe in Richtung auf die künftige Falten"spitze" hin abnimmt. Wesentlich ist jedenfalls, daß der gegenseitige Abstand der Faltenwände nicht primär durch die Einprägungen in das Filtermaterial selbst bestimmt ist, sondern durch die zusätzlichen Abstandshalter. Die Prägung des Filtermaterials kann hierzu einen Beitrag liefern, dient aber primär dessen Versteifung und damit Stabilisierung während der Herstellung.

Mit dem erfindungsgemäßen Verfahren können insbesondere Filtereinsätze hergestellt werden, die einen Körper von der Gestalt eines Quaders oder eines Hohlzylinders bilden und etwa in der Erdgas- und Erdölindustrie, der Energiewirtschaft, der Lüftungs- und Klimatechnik oder im Kraftfahrzeugbau als Luft- bzw. Gasfilter benötigt werden.

Die pro Längeneinheit des Materials aufgetragene Klebstoffmenge kann in vorteilhafter Weise über die Variation der pro Zeiteinheit aus einer Auftragsvorrichtung ausgegebenen Klebstoffmenge verändert werden. Es ist aber auch - zusätzlich oder alternativ hierzu - möglich, auf dem zur Ausbildung der Klebstoffschicht vorgesehenen Bereich in einem Teil seiner Längserstreckung mehrere Klebstoffaufträge übereinander vorzunehmen. Weiterhin kann die pro Längeneinheit des Materials aufgetragene Klebstoffmenge durch Variation der Relativgeschwindigkeit zwischen der Materialbahn und der Austrittsöffnung einer Auftragsvorrichtung verändert werden.

Der zweite Teilschritt des Faltens - die Erweiterung des Faltenabtandes - muß (je nach Klebstoff, Filtermetraisl und Verfahrensbedingungen) ggf. nach einer Pause nach dem ersten Teilschritt ausgeführt werden, die so bemessen ist, daß ein vorbestimmtes Anhärten bzw. eine graduelle Vernetzung des Klebstoffs erfolgen kann.

Es ist zu beachten, daß in den vorstehenden Ausführungen und den Ansprüchen unter einem Filtermaterial sämtliche üblichen bzw. für bestimmte Fluide einsetzbaren Filtermaterialien, insbesondere Faservliese aus Zellulose, Glas-, Mineral- oder Keramikfasern, feinmaschige Gewebe mit oder ohne Imprägnierungen etc. und unter Klebstoffen die zur stoffschlüssigen Verbindung derartiger Materialien miteinander brauchbaren Stoffe, insbesondere Klebstoffe im enegeren Sinne, aber auch am Filtermaterial haftende thermoplastische oder Schaumstoffmaterialien o. ä., zu verstehen sind.

Unter einer im wesentlichen zickzackförmigen, kontinuierlichen Faltung sind auch Faltenanordnungen inbegriffen, bei denen der Faltenquerschnitt senkrecht zu den Faltenkanten etwa trapezförmig ist oder die Faltenkanten verrundet sind.

Weitere vorteilhafte Weiterbildungen der Erfindung sind in den Unteransprüchen gekennzeichnet bzw. werden nachstehend zusammen mit der Beschreibung bevorzugter Ausführungen der Erfindung anhand der Figuren näher dargestellt. Es zeigen:
Fig. 1a und 1b perspektivische Prinzipdarstellungen je eines in einer Ausführungsform der Erfindung hergestellten Filtereinsatzes,
Fig. 2 eine Prinzipdarstellung der Vorrichtung zur Durchführung des Verfahrens gemäß einer Ausführungsform,
Fig. 3a bis 3f schematische Querschnittsdarstellungen der Faltenanordungen von Filtereinsätzen (senkrecht zu den Faltenkanten), die gemäß Ausführungsformen der Erfindung hergestellt wurden, und
Fig. 4a und 4b schematische Querschnittsdarstellungen von Faltenanordnungen (parallel zu den Faltenkanten), die gemäß Ausführungsformen der Erfindung hergestellt wurden.

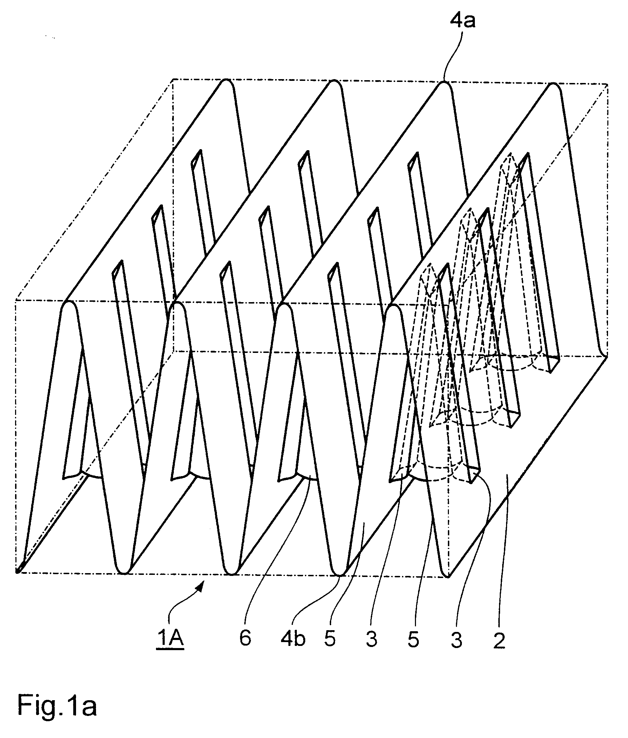

Fig. 1a zeigt in stark vereinfachter Darstellung einen in seiner äußeren Gestalt angenähert quaderförmigen Filtereinsatz 1A aus einem Glasfaser-Filtervlies 2 mit Kunstharz-Imprägnierung, das mit einseitig eingeprägten, sickenartigen Vertiefungen 3 versehen und mit (leicht verrundeten) oberen und unteren Faltenkanten 4a und 4b annähernd zickzackförmig gefaltet ist, so daß die eingeprägten Vertiefungen 3 in je zwei benachbarten Faltenwänden 5 einander zugewandt sind. Die Vertiefungen bzw. Sicken 3 haben eine zu den unteren Faltenkanten 4b hin, d.h. mit zunehmender Öffnungsweite der Falten, zunehmende Höhe.

Die Faltenabstände der Faltung sind (zur Erreichung bestimmter Einsatzparameter) so groß gewählt, daß die Scheitelflächen einander gegenüberliegender Vertiefungen 3 einander nicht berühren.

Auf jede der Scheitelflächen 3a ist eine in Richtung auf die unteren Faltenkanten 4b hin dicker werdende Klebstoffschicht 6 aufgetragen. Die Klebstoffaggregate auf einander gegenüberliegender Vertiefungen 3 sind miteinander verbunden, wodurch (im ausgehärteten Zustand des Klebstoffs) die jeweils einander gegenüberliegenden Vertiefungen 3 und damit die Faltenwände 5, in die sie geprägt sind, fest miteinander verbunden und im wesentlichen starr gegeneinander abgestützt sind. Damit ist ein mechanisch weitgehend drucksteifer Filtereinsatz 1A gebildet.

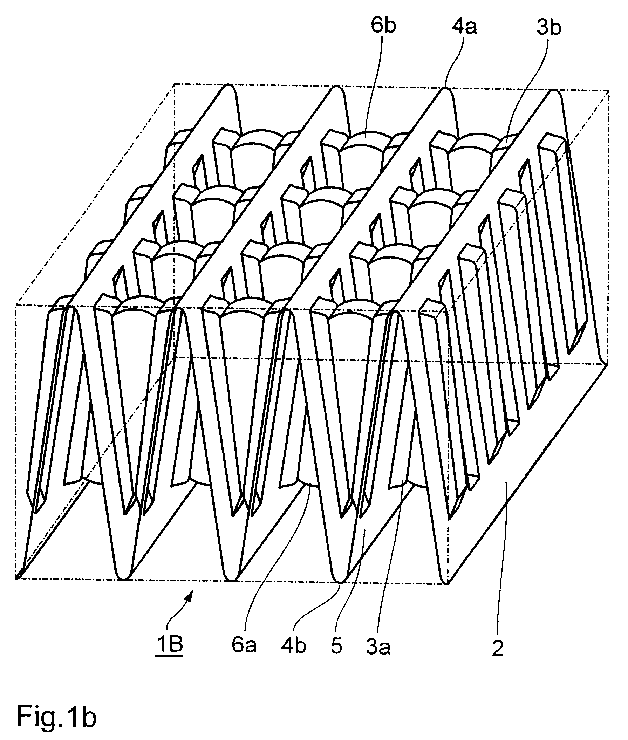

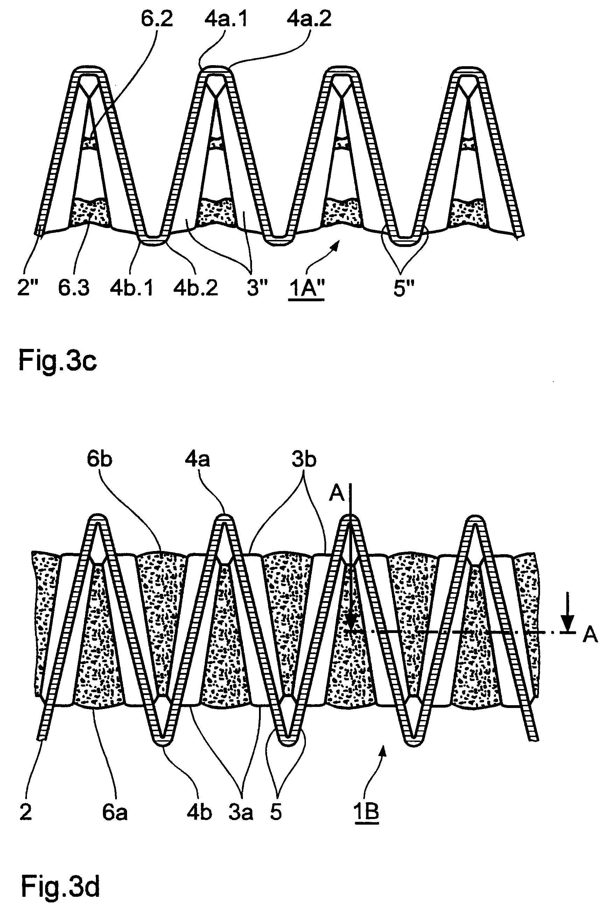

Fig. 1b zeigt einen gegenüber der Ausführung nach Fig. 1a modifizierten Filtereinsatz 1B, bei dem beidseitig auf jeder Faltenwand 5 Sicken 3a bzw. 3b und Abstandshalter (Klebstoffaggregate) 6a bzw. 6b vorgesehen sind; vgl. auch die Beschreibung zu Fig. 3d weiter unten.

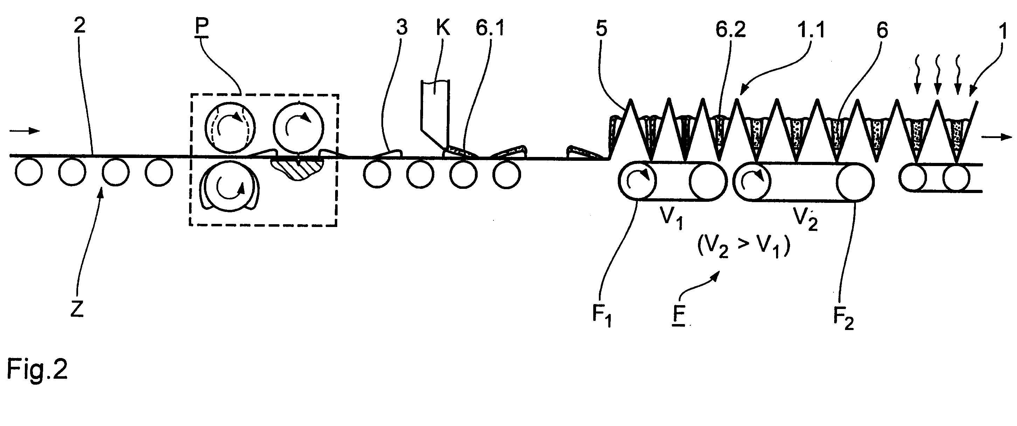

Fig. 2 zeigt in einer Prinzipskizze die wesentlichen Schritte der Bildung eines gefalteten Filtereinsatzes der in Fig. 1 dargestellten Art und die wichtigsten Elemente der dazu eingesetzten Vorrichtung.

Eine (quasi-endlose) Bahn des Filtermaterials 2 wird über eine Rollenstrecke Z zunächst einer mehrere Prägewalzen aufweisenden Prägevorrichtung P zum Einprägen der Faltlinien für die spätere Faltung und der aussteifenden Sicken 3 und danach einer mehrere Heißkleber-Auftragsmodule mit zentraler Klebstoffzuführung aufweisenden Klebstoff-Auftragsvorrichtung K zugeführt, in der die Scheitelflächen der Sicken 3 mit einem fadenförmigen, pastosen Heißkleberauftrag 6.1 versehen werden. Der Heißkleber dringt etwas in das Filtermaterial ein und verbindet sich dadurch mit diesem.

Mit der Übergabe der Materialbahn 2 an ein erstes Riemensystem F1, das mit einer Geschwindigkeit V₁ läuft, wird diese in dichte Falten gelegt, wobei die Sicken 3 in benachbarten Faltenwandungen 5 aufeinander zu bewegt werden und die - noch nicht ausgehärteten Klebstoffschichten - 6 auf den einander benachbarten Sicken 3 in so engen Kontakt gebracht werden, daß sie miteinander zu Klebstoffaggregaten 6.2 verschmelzen. Es entsteht ein primäres Faltenpaket 1.1 mit geringem Faltenabstand, dessen Falten jedoch noch nicht fixiert sind.

Danach wird dieses Faltenpaket 1.1 an ein zweites Riemensystem F2 übergeben, das mit einer die erste Geschwindigkeit V₁ übersteigenden Geschwindigkeit V₂ läuft, wodurch zwischen den einzelnen Falten eine Zugkraft erzeugt wird und die Falten, zwischen denen der Klebstoff 6.2 immer noch nicht ausgehärtet ist, wieder etwas auseinandergezogen werden. Dadurch werden die beidseitig fest am Filtermaterial 2 haftenden Klebstoffäden 6.2 in Laufrichtung des Faltenpaketes und somit annähernd senkrecht zur Richtung der Faltenkanten gestreckt, so daß ihre Querschnittsfläche eine rechteckige bis doppel-T-förmige (oder knochenähnliche) Gestalt 6 annimmt.

In dieser Gestalt werden die Klebstoffäden ausgehärtet (was durch die gewellten Pfeile symbolisiert ist), wonach die Sicken 3 in entsprechendem Abstand durch die ausgehärteten Klebstoffschichten gegeneinander abgestützt und damit auch die Faltenwände 5 fixiert sind. Damit ist das Faltenpaket 1 mit dem gewünschten großen Faltenabstand fertig gebildet.

Fig. 3a zeigt eine Querschnittsdarstellung der Faltenanordnung des in Fig. 1a dargestellten Filtereinsatzes 1A in einer Schnittebene parallel zur Längserstreckung der Abstandshalter. Hier ist die Höhenzunahme sowohl der Sicken (Vertiefungen) 3 als auch der Klebstoffschichten 6 in Richtung von den oberen zu den unteren Faltenkanten hin sehr deutlich zu erkennen.

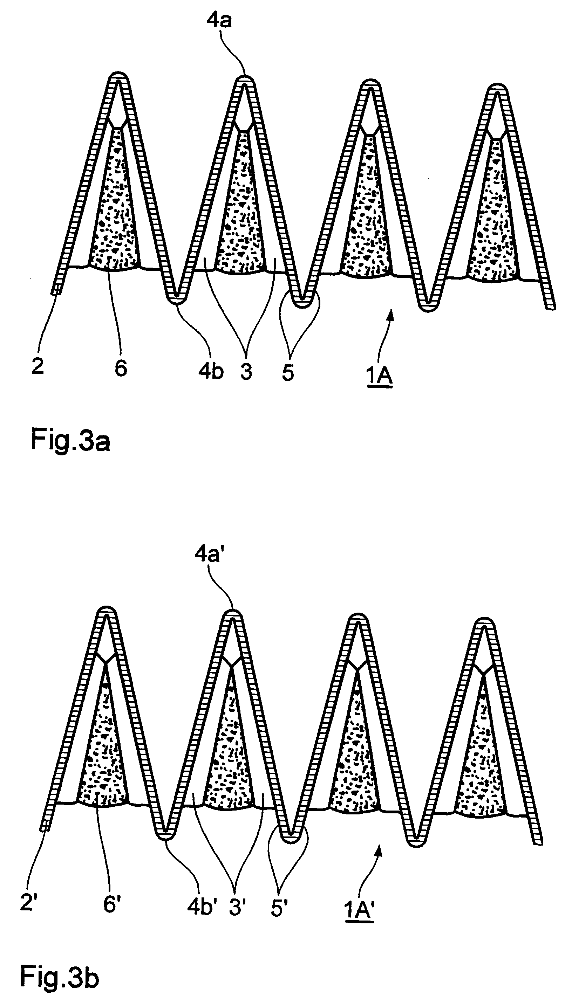

Fig. 3b zeigt in einer alternativen Ausbildung einen Filtereinsatz 1A', bei dem in einer zu Fig. 3a ähnlichen Grundanordnung die Faltenwände als Wände 5' mit über ihre Längserstreckung im wesentlichen konstante Höhe aufweisenden Sicken 3' ausgebildet sind, während die Zunahme der Dicke der Klebstoffschichten 6' vom oberen Faltenkantenbereich 4a' zum unteren Faltenkantenbereich 4b' hier - bei etwa gleichem Faltenwinkel - ausgeprägter ist als bei der Anordnung nach Fig. 3a.

Fig. 3c zeigt ein Filterelement 1'' nach einer anderen Ausführungsform, bei dem der Querschnitt der Faltung trapezförmig ist derart, daß zwischen aufeinanderfolgenden Faltenwänden 5'' jeweils zwei Faltlinien 4a'' (obere Faltenkanten) bzw. 4b'' (untere Faltenkanten) vorgesehen sind. Die Faltenwände 5'' weisen jeweils eingeprägte Sicken 3'' auf, die von den oberen Faltenkanten 4a'' bis zu den unteren Faltenkanten 4b'' reichen und über diese Erstreckung konstante Höhe haben. Im oberen Teil tragen die Sicken 3'' jeweils einen relativ kleinen Klebstoffpunkt 6.2, und nahe dem unteren, den unteren Faltenkanten 4b'' benachbarten, Ende tragen sie - entsprechend dem hier größeren Faltenabstand - ein wesentlich voluminöseres, halbkugelförmiges Klebstoffaggregat 6.3. Die einzelnen Klebstoffaggregate 6.2 bzw. 6.3 auf den Sicken 3'' einander benachbarter Faltenwände sind jeweils miteinander verschmolzen, so daß die Faltenwände 5'' hierüber fest miteinander verbunden sind.

Fig. 3d zeigt eine Querschnittsdarstellung des Filterelementes 1B gemäß Fig. 1b, bei dem Faltenwände vorgesehen sind, die jeweils beidseitig Sicken 3a bzw. 3b, mithin sowohl Vertiefungen als auch Erhebungen, aufweisen. (Die übrigen Bezugsziffern aus Fig. 1a bzw. 3a wurden zur Vereinfachung beibehalten.) Die einander gegenüberliegenden Erhebungen bzw. Vertiefungen 3a und 3b sind jeweils - wie bei Fig. 3a - über ein zusammengesetztes Klebstoffaggregat miteinander verbunden, wobei sich durch die allseitige Verbindung benachbarter Faltenwände ein hochgradig druck- und zugstabiles und damit auch in starken Strömungen mit turbulenten Anteilen bzw. starken zeitlichen Druckänderungen sehr formbeständiges Filterpaket ergibt.

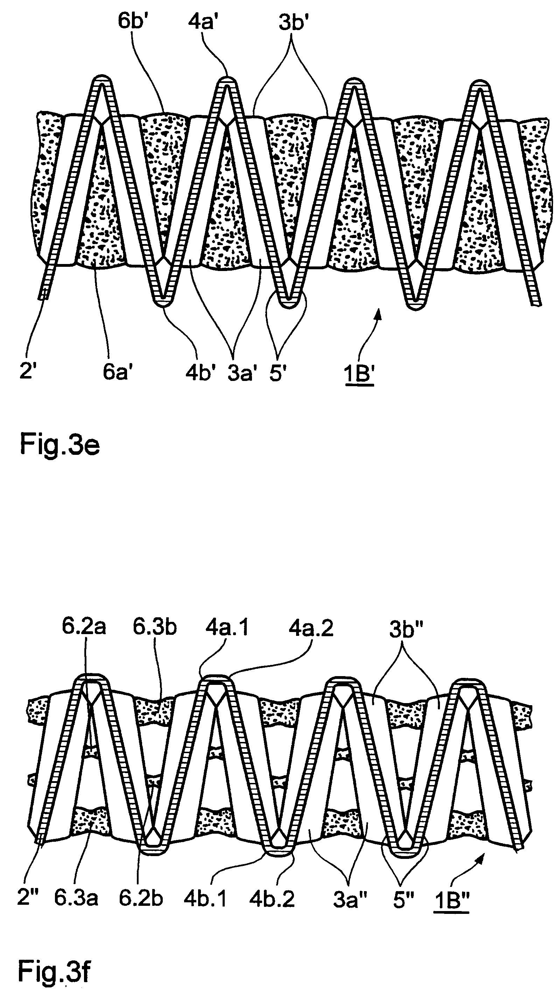

Eine analoge Ausbildung mit beidseitig jeder Faltenwand vorgesehenen Sicken und Klebstoffaggregaten ist auch bei den Anordnungen nach Fig. 3b und 3c möglich. Diese Ausführungsformen sind in Fig. 3e bzw. 3f gezeigt, wobei die Bezugsziffern für ähnliche Teile denen bei den vorangehenden Figuren entsprechen und auf eine gesonderte Beschreibung hier verzichtet werden kann.

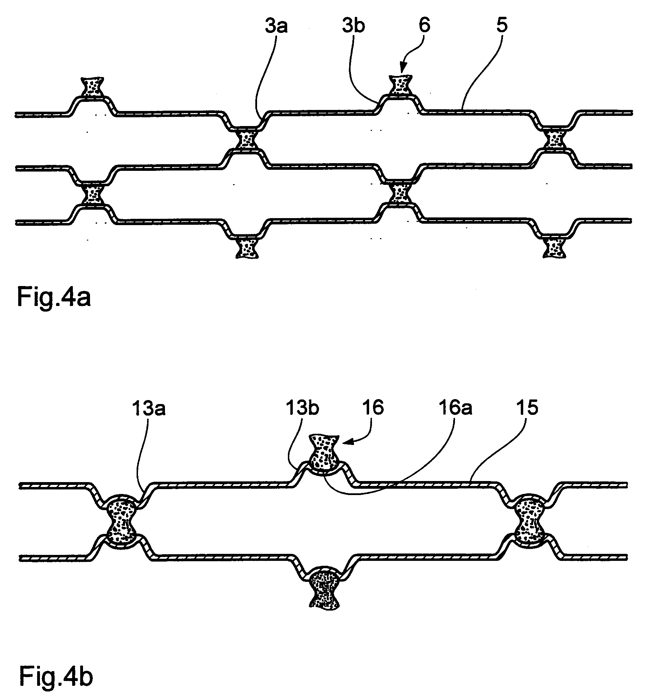

Fig. 4a zeigt eine Querschnittsdarstellung von zwei Falten einer Faltung nach Fig. 3d in einer Ebene parallel zu den Faltenkantenabschnitten (längs der Linie A-A in Fig. 3d) in einer Ausführungsform, bei der die im Mittelteil der flach auf den Sicke-Scheitelflächen aufliegenden Klebstoffaggregate verringerte Breite erkennbar ist.

Fig. 4b zeigt eine Abwandlung dieser Anordnung, bei der Sicken 13a und 13 in Faltenwänden 15 derart profiliert sind, daß sie eine zentrale Längsrille 16a aufweisen. In diese ist jeweils ein Klebstoffaden 16 mit relativ geringer Breite und mit durch die Rillenwandung exakt definierter, im Schnitt annähernd halbkreisförmiger, Kontaktfläche zur Sicke eingebracht. Hier ist zur Verbindung einander zugewandter Sicken nur ein Klebstoffauftrag - eben in Form des Fadens 16 in jeweils eine der im Ergebnis des (späteren) Faltungsvorganges benachbarten Rillen 16a - vorgesehen. Die endgültige knochenähnliche Querschnittsgestalt des Abstandshalters bildet sich im Ergebnis dessen aus, daß dieser Faden gemäß dem Verfahren nach Fig. 2 zunächst mit der gegenüberliegenden Rille in Kontakt gebracht und verklebt und dann im noch plastischen Zustand in Querrichtung gestreckt wird.

Die Anordnung nach Fig. 4b mit in sich profilierten Sicken bietet den Vorteil, daß der Klebstoffauftrag mit geringer und exakt definierter seitlicher Erstreckung erfolgt, so daß Verschmierungen auf dem Filtermaterial vermieden werden und die wirksame Filterfläche maximiert werden kann.

Ausführungen in Art der oben beschriebenen sind ähnlich auch für hohlzylindrische Filtereinsätze brauchbar, wobei in Abwandlung des in Fig. 2 skizzierten Verfahrens vor der Aushärtung der Klebstoffaggregate die hohlzylindrisch geschlossene Form des Faltenpakets erzeugt werden muß. Dies geschieht in zweckmäßiger Weise dadurch, daß der zweite Schritt des Faltungsvorganges als der Schritt der Auffächerung des (nach dem ersten Schritt noch quaderförmigen) Faltenpaketes in die Hohlyzylindergestalt ausgeführt wird bzw. diesen Vorgang einschließt.

Die Erfindung beschränkt sich in ihrer Ausführung nicht auf die vorstehend angegebenen Ausführungsbeispiele. Vielmehr ist - insbesondere hinsichtlich der Geometrie und der Kombination von Einprägungen in das Filtermaterial und Auftragsschichten auf dieses - eine Vielzahl von Varianten denkbar.

## Patentansprüche

1. Verfahren zur Herstellung eines Filtereinsatzes (1; 1A; 1B; 1A'; 1B'; 1A''; 1B'') für ein Fluidfilter, insbesondere in quaderförmiger oder hohlzylindrischer Außenform, der eine Anzahl von in im wesentlichen zickzackförmiger, kontinuierlicher Faltung angeordneten Faltenwänden (5; 5'; 5''; 15) aus Filtermaterial (2; 2'; 2'') aufweist, wobei benachbarte Faltenwände mindestens abschnittsweise über einen Klebstoff-Abstandshalter (6; 6'; 6a, 6b; 6a', 6b'; 6.2, 6.3; 6.2a, 6.2b, 6.3a, 6.3b; 16) miteinander verbunden und gegeneinander abgestützt sind, wobei eine Bahn des Filtermaterials mit die Lage von Faltenkanten (4a, 4b; 4a', 4b'; 4a.1, 4a.2, 4b.1, 4b.2) vorbestimmenden Einprägungen versehen, auf mindestens jeweils einen der beim fertigen Filtereinsatz benachbarten Faltenwänden entsprechenden Abschnitte des Filtermaterials Klebstoff aufgetragen, die Materialbahn an den die Faltenkanten vorbestimmenden Einprägungen gefaltet wird,
**dadurch gekennzeichnet,** daß
der Schritt des Faltens des Filtermaterials zur Bestimmung der äußeren Gestalt des Filtereinsatzes in zwei Teilschritten ausgeführt wird, wobei die Materialbahn im ersten Teilschritt in Falten mit geringem Abstand gelegt wird derart, daß ein an beiden benachbarten Faltenwänden festhaftendes Klebstoffaggregat ausgebildet wird und die Falten im zweiten Teilschritt vor Aushärtung des Klebstoffs mindestens in einem Abschnitt ihrer Höhe wieder um einen vorbestimmten Betrag auseinandergezogen werden derart, daß mindestens ein Teil der Klebstoff-Abstandshalter eine in Richtung senkrecht zu den Faltenkanten nicht konstante Höhe erhält, so daß das Klebbstoffaggregat in gestrecktem Zustand ausgehärtet wird.

2. Verfahren nach Anspruch 1 , **dadurch gekennzeichnet,** daß zur Bildung eiens im wesentlichen quaderförmigen Filtereinsatzes das im ersten Teilschritt gebildete Faltenpaket (1.1) im zweiten Teilschritt mit gegenüber einem Vorschub (V₁) im ersten Teilschritt erhöhter Geschwindigkeit (V₂) vorgeschoben wird.

3. Verfahren nach Anspruch 1, **dadurch gekennzeichnet,** daß zur Bildung eines im wesentlichen hohlzylindrischen Filtereinsatzes das im ersten Teilschritt gebildete Faltenpaket im zweiten Teilschritt ringförmig aufgefächert wird.

4. Verfahren nach einem der vorangehenden Ansprüche, **dadurch gekennzeichnet,** daß in die Ebene mindestens eines Teils der Faltenwände (5; 5'; 5''; 15) Vertiefungen und/oder Erhebungen (3; 3'; 3''; 3a, 3b; 3a', 3b'; 3a'', 3b''; 13a, 13b) zur Versteifung der Faltung eingeprägt werden derart, daß die Vertiefungen und/oder Erhebungen benachbarter Faltenwände mindestens abschnittsweise über Klebstoff-Abstandshalter miteinander verbunden sind.

5. Verfahren nach einem der vorangehenden Ansprüche , **dadurch gekennzeichnet,** daß den Klebstoff-Abstandshaltern mindestens in einem Abschnitt ihrer Längserstreckung eine größere Höhe verliehen wird als ihre mittlere Breite ist.

6. Verfahren nach einem der vorangehenden Ansprüche , **dadurch gekennzeichnet,** daß die Klebstoff-Abstandshalter gleichsinnig mit der Querschnittsverengung einer Falte in Richtung auf die Faltenkante hin flacher gebildet werden, die die durch den jeweiligen Klebstoff-Abstandshalter miteinander verbundenen Faltenwände gemeinsam haben.

7. Verfahren nach einem der vorangehenden Ansprüche, **dadurch gekennzeichnet,** daß ein Klebstoff-Abstandshalter nur in demjenigen Bereich der Faltung aufgebracht wird, in dem die Faltenwände großen Abstand voneinander aufweisen.

8. Verfahren nach einem der Ansprüche 4 bis 7, **dadurch gekennzeichnet,** daß die Vertiefungen bzw. Erhebungen durch Prägen des Filtermaterials derart ausgebildet werden, daß ihre Höhe in Richtung ihrer Längserstreckung im wesentlichen konstant ist.

9. Verfahren nach einem der Ansprüche 4 bis 7 , **dadurch gekennzeichnet,** daß die Vertiefungen bzw. Erhebungen in den jeweils zwei Faltenwänden, die sich gegeneinander abstützen, entsprechenden Abschnitten der Materialbahn so ausgebildet werden, daß ihre Höhe in Richtung auf die diese Abschnitte miteinander verbindende Faltlinie hin abnimmt.

10. Verfahren nach einem der vorangehenden Ansprüche, **dadurch gekennzeichnet,** daß die pro Längeneinheit auf die Filtermaterialbahn aufgetragene Klebstoffmenge in Richtung auf eine Einprägung hin, die eine zwei über die jeweilige Klebstoffschicht miteinander zu verbindenden Faltenwänden gemeinsame Faltenkante vorbestimmt, kontinuierlich abnehmend gesteuert wird.

11. Verfahren nach einem der vorangehenden Ansprüche, **dadurch gekennzeichnet,** daß der Klebstoffauftrag im wesentlichen linear, d.h. mit gegenüber der Länge der Klebstoffschicht geringer Breite, erfolgt.

12. Verfahren nach Anspruch 10 oder 11 , **dadurch gekennzeichnet,** daß die pro Längeneinheit des Materials aufgetragene Klebstoffmenge über die Variation der pro Zeiteinheit aus einer Auftragsvorrichtung ausgegebenen Klebstoffmenge verändert wird.

13. Verfahren nach einem der Ansprüche 10 bis 12 , **dadurch gekennzeichnet,** daß auf dem zur Ausbildung der Klebstoffschicht vorgesehenen Bereich in einem Teil seiner Längserstreckung mehrere Klebstoffaufträge übereinander erfolgen.

14. Verfahren nach einem der Ansprüche 10 bis 13 , **dadurch gekennzeichnet,** daß die pro Längeneinheit des Materials aufgetragene Klebstoffmenge durch Variation der Relativgeschwindigkeit zwischen der Materialbahn und der Austrittsöffnung einer Auftragsvorrichtung verändert wird.

15. Verfahren nach einem der vorangehenden Ansprüche, **dadurch gekennzeichnet,** daß der zweite Teilschritt des Faltens nach einer Pause nach dem ersten Teilschritt ausgeführt wird, die so bemessen ist, daß ein vorbestimmtes Anhärten bzw. eine graduelle Vernetzung der Klebstoff-Abstandshalter erfolgt.

16. Vorrichtung zur Durchführung des Verfahrens nach einem der vorangehenden Ansprüche mit einer Filtermaterial-Zuführvorrichtung (Z), einer Klebstoff-Auftragsvorrichtung (K) und einer Falt- und Abzugsvorrichtung (F)
die eine erste Einrichtung (F1) zum Anfalten des Filtermaterials (2) und zu dessen Transport und eine zweite Einrichtung (F2) zum Weitertransport und/oder zum Auffächern des angefalteten Filtermaterials (1.1) und zum Vergrößern seiner anfänglichen Faltenweite aufweist.

17. Vorrichtung nach Anspruch 16, **dadurch gekennzeichnet,** daß die erste Einrichtung (F1) eine mit einer ersten Geschwindigkeit (V1) laufende erste Riemenonordnung und die zweite Einrichtung (F2) eine mit einer zweiten, höheren Geschwindigkeit (V2) laufende zweite Riemenanordnung ist.

18. Vorrichtung nach Anspruch 16 oder 17, **dadurch gekennzeichnet,** daß der Klebstoff-Auftragsvorrichtung (K) eine Prägevorrichtung (P) zum Einprägen von Vertiefungen und/oder Erhebungen (3) in das Filtermaterial (2) vorgeschaltet ist.

## Claims

1. Process for producing a filter insert (1A;1B;1B';1A'';1B'') for a fluid filter, particularly having a box-shaped or hollow cylindrical outer shape, which has a number of fold walls (5;5';5'';15) of filter material (2;2';2'') arranged in a substantially zigzag-shaped continuous fold, adjacent fold walls being connected to one another and resting on one another at least in part by means of an adhesive spacer (6;6';6a,6b;6a',6b';6.2; 6.3;6.2a,6.2b,6.3a,6.3b;16), in which a strip of the filter material is provided with indentations which determine the position of fold edges (4a,4b;4a',4b';4a.1,4a.2,4b.1,4b.2), the adhesive is applied to at least one of the portions of the filter material which corresponds to the fold walls which will be adjacent when the filter insert is complete, the strip of material is folded at the indentations which determine the fold edges, characterised in that the step of folding the filter material in order to determine the outer configuration of the filter insert is carried out in two partial steps, in which, in the first step, the material is put into folds at a small spacing such that an adhesive unit is formed which firmly sticks to both adjecent fold walls and in the second step prior to curing of the adhesive the folds are pulled apart again by a predetermined amount at least in part of their height, in such a way that at least some of the adhesive spacers have a height which is not constant in the direction at right angles to the fold edges such that the adhesive unit is finally cured in its stretched state.

2. Process according to claim 1, characterised in that, in order to form a substantially box-shaped filter insert, the bundle of folds (1.1) formed in the first step is advanced in the second step at a speed (V₂) which is faster than an advance (V₁) in the first step.

3. Process according to claim 1, characterised in that, in order to form a substantially hollow cylindrical filter insert, the bundle of folds formed in the first step is fanned out in a ring-shape in the second step.

4. Process according to one of the preceding claims, characterised in that depressions and/or elevations (3; 3'; 3'';3a, 3b;3a' 3b', ;3a'', 3b'' ;13a, 13b) for reinforcing the folds are embossed into the plane of at least part of the fold walls (5;5';5'';15) in such a way that the depressions and/or elevations of adjacent fold walls are connected to one another at least in certain areas via adhesive spacers.

5. Process according to one of the preceding claims, characterised in that, in at least part of their longitudinal extent, the adhesive spacers are given a height which exceeds their average width.

6. Process according to one of the preceding claims, characterised in that the adhesive spacers are folded flatter, in accordance with the cross sectional tapering of a fold, towards the edge of the fold which the fold walls join together by the adhesive spacers have in common.

7. Process according to one of the preceding claims, characterised in that an adhesive spacer is applied only in that area of the folds in which the fold walls are at a considerable spacing from one another.

8. Process according to one of claims 4 to 7, characterised in that the depressions or elevations are formed by embossing the filter material in such a way that their height is substantially constant in the direction of their longitudinal extent.

9. Process according to one of claims 4 to 7, characterised in that the depressions or recesses are formed in the sections of the strip of material corresponding to two fold walls resting against one another in such a way that the height of said depressions or elevations decreases towards the fold line which joins these sections together.

10. Process according to one of the preceding claims, characterised in that the quantity of adhesive applied per unit of length to the strip of filter material is controlled so as to decrease continuously towards an indentation which determines a fold edge common to two fold walls which are to be connected via the layer of adhesive in question.

11. Process according to one of the preceding claims, characterised in that the adhesive is applied in a substantially linear configuration, ie. the width of the layer of adhesive being less than the length thereof.

12. Process according to claim 10 or 11, characterised in that the quantity of adhesive applied per unit of length of the material is altered by varying the quantity of adhesive delivered from an applicator device per unit of time.

13. Process according to one of claims 10 to 12, characterised in that a plurality of applications of adhesive are made one on top of another on the area provided fQr forming the layer of adhesive along part of the longitudinal extent thereof.

14. Process according to one of claims 10 to 13, characterised in that the quantity of adhesive applied per unit of length of the material is altered by varying the relative speed between the strip of material and the outlet opening of an applicator device.

15. Process according to one of the preceding claims, characterised in that the second step of folding is carried out after a pause after the first step, which is such that predetermined curing or gradual cross linking of the adhesive spacers takes place.

16. Apparatus for carrying out the process according to one of the preceding claims with a filter material supply device (Z), an adhesive applicator device (K) and a folding and pulling device (F), which comprises a first device (F1) for folding the filter material (2) and tranzporting it and a second device (F2) for further transporting and/or opening out the folded filter material (1.1) and increasing its initial fold width.

17. Apparatus according to claim 16, characterised in that the first device (F1) is a first belt arrangement travelling at a first speed (V₁) and the second device (F2) is a second belt arrangement travelling at a second, higher speed (V₂).

18. Apparatus according to claim 16 or 17, characterised in that the adhesive applicator device (K) is preceded by an embossing apparatus (P) for embossing depressions and/or elevations (3) in the filter material (2).

## Revendications

1. Procédé de fabrication d'une cartouche de filtre (1 ; 1A ; 1B ; 1A' ; 1B' ; 1A'' ; 1B'') pour un filtre à fluide, en particulier de forme extérieure carrée ou cylindrique creuse, qui présente un certain nombre de parois plissées (5 ; 5' ; 5'' ; 15) en matériau filtrant (2 ; 2' ; 2''), sensiblement suivant un pliage continu en forme de zigzag, les parois de plis voisines étant reliées au moins par tronçons l'une à l'autre et appuyées l'une contre l'autre au moyen d'un élément d'écartement en colle (6 ; 6' ; 6a, 6b ; 6a', 6b' ; 6.2 ; 6.3 ; 6.2a, 6.2b, 6.3a, 6.3b ; 16), et une bande du matériau filtrant étant pourvue d'empreintes qui prédéterminent la position des arêtes de pliage (4a, 4b ; 4a', 4b' ; 4a.1, 4a.2, 4b.1, 4b.2), l'on applique de la colle au moins sur l'un des tronçons du matériau filtrant qui correspond respectivement aux parois de plis voisines dans la cartouche filtrante terminée, la bande de matériau est repliée au niveau des empreintes qui prédéterminent les arêtes de pliage,
caractérisé en ce que l'opération de pliage du matériau filtrant pour déterminer la forme extérieure de la cartouche de filtre est exécutée en deux opérations partielles, la bande de matériau étant posée dans la première opération en plis à faible distance, de telle manière qu'il se forme un agrégat de colle qui adhère fermement sur les deux parois de pli voisines, dans la seconde opération partielle, avant durcissement de la colle, on écarte à nouveau les plis sur au moins un tronçon de leur hauteur d'une valeur prédéterminée, de telle manière qu'une partie des éléments d'écartement en colle au moins obtient une hauteur qui n'est pas constante dans la direction perpendiculaire aux arêtes de pliage, de telle manière que l'agrégat de colle durcit dans la situation étirée.

2. Procédé selon la revendication 1, caractérisé en ce que, pour former une cartouche de filtre sensiblement de forme carrée, la pile de plis (1.1) formée dans la première opération partielle est avancée au cours de la seconde opération partielle à une vitesse (V2) augmentée par rapport à une avance (V1) dans la première opération partielle.

3. Procédé selon la revendication 1, caractérisé en ce que, pour former une cartouche de filtre sensiblement cylindrique creuse, la pile de plis formée dans la première opération partielle est déployée sous forme annulaire dans la seconde opération partielle.

4. Procédé selon l'une des revendications précédentes, caractérisé en ce que l'on imprime dans le plan d'au moins une partie des parois de plis (5 ; 5' ; 5'' ; 15) des creux et/ou des bosses (3 ; 3' ; 3'' ; 3a, 3b ; 3a', 3b' ; 3a'', 3b'' ; 13a, 13b) pour renforcer le plissage, de telle façon que les creux et/ou les bosses de parois de plis voisines sont relié(e)s les un(e)s aux autres au moins par tronçons au moyen d'éléments d'écartement en colle.

5. Procédé selon l'une des revendications précédentes, caractérisé en ce que l'on attribue aux éléments d'écartement en colle au moins dans un tronçon de leur extension longitudinale une hauteur supérieure à leur largeur moyenne.

6. Procédé selon l'une des revendications précédentes, caractérisé en ce que les éléments d'écartement en colle sont formés en s'aplatissant dans le même sens que le rétrécissement de section d'un pli en direction de l'arête de pliage que les parois de plis reliées l'une à l'autre par l'élément d'écartement en colle respectif ont en commun.

7. Procédé selon l'une des revendications précédentes, caractérisé en ce que l'on applique un élément d'écartement en colle uniquement dans la région du pliage dans laquelle les parois des plis présentent une grande distance les unes des autres.

8. Procédé selon l'une des revendications 4 à 7, caractérisé en ce que les creux ou les bosses sont réalisés par matriçage du matériau de filtre de telle manière que leur hauteur en direction de leur extension longitudinale est sensiblement constante.

9. Procédé selon l'une des revendications 4 à 7, caractérisé en ce que les creux ou les bosses sont réalisés dans des tronçons de la bande de matériau qui correspondant à deux parois de plis respectives qui se soutiennent l'une l'autre, de telle façon que leur hauteur en direction de la ligne de pliage qui relie ces tronçons l'un avec l'autre diminue.

10. Procédé selon l'une des revendications précédentes, caractérisé en ce que la quantité de colle appliquée par unité de longueur sur la bande de matériau de filtre, en direction de l'une des impressions qui prédétermine une arête de pli commune à deux parois de plis à relier l'une à l'autre au moyen de la couche de colle respective, est commandée de façon à diminuer de façon continue.

11. Procédé selon l'une des revendications précédentes, caractérisé en ce que l'application de colle a lieu de façon sensiblement linéaire, c'est-à-dire avec une largeur plus faible que la longueur de la couche de colle.

12. Procédé selon l'une ou l'autre des revendications 10 et 11, caractérisé en ce que la quantité de colle appliquée par unité de longueur est modifiée en faisant varier la quantité de colle distribuée par unité de temps hors d'un dispositif d'application.

13. Procédé selon l'une des revendications 10 à 12, caractérisé en ce que dans la région prévue pour la réalisation de la couche de colle, on procède à plusieurs applications de colle les unes sur les autres dans une partie de son extension longitudinale.

14. Procédé selon l'une des revendications 10 à 13, caractérisé en ce que la quantité de colle appliquée par unité de longueur du matériau est modifiée par variation de la vitesse relative entre la bande de matériau et l'ouverture de sortie d'un dispositif d'application.

15. Procédé selon l'une des revendications précédentes, caractérisé en ce que la seconde opération partielle de pliage est exécutée après la première opération partielle, après une pause dont la longueur est choisie telle qu'il se produit un durcissement prédéterminé ou une réticulation graduelle des éléments d'écartement en colle.

16. Appareil pour mise en oeuvre du procédé selon l'une des revendications précédentes, comprenant un dispositif d'amenée de matériau filtrant (Z), un dispositif d'application de colle (K), et un dispositif de pliage et de tirage (F), qui comprend un premier dispositif (F1) pour plier le matériau filtrant (2) et pour son transport, et un second dispositif (F2) pour la poursuite du transport et/ou pour déployer le matériau filtrant plissé (1.1) et pour augmenter sa largeur de plissage initiale.

17. Appareil selon la revendication 16, caractérisé en ce que le premier dispositif (F1) est un premier agencement à courroie qui circule à une première vitesse (V1), et le second dispositif (F2) est un second agencement à courroie qui circule à une seconde vitesse (V2) plus élevée.

18. Appareil selon l'une ou l'autre des revendications 16 et 17, caractérisé en ce que le dispositif d'application de colle (3) est précédé d'un dispositif d'impression (P) pour imprimer des creux et/ou des bosses (3) dans le matériau filtrant (2).
